# EUROPÄISCHE PATENTANMELDUNG

(11) **EP 0 816 388 A2**
(43) Veröffentlichungstag der Anmeldung: **07.01.1998**
(21) Anmeldenummer: 97110348.6
(22) Anmeldetag: 25.06.1997
(51) Int. Cl.: C08F 8/00

(54) **Bindemittel auf Basis von Kohlenwasserstoffharzen, Verfahren zu dessen Herstellung und Verwendung**

(30) Priorität: 03.07.1996 DE 19626727
(71) Anmelder: Vianova Resins GmbH, 55252 Mainz-Kastel (DE)
(72) Erfinder: Wallach, Thomas, Dr., 65597 Hünfelden (DE); Bothe, Lothar, Dr., 55124 Mainz (DE)

(57) **Zusammenfassung**

Modifizierte Kohlenwasserstoffharze, erhältlich durch Umsetzung von
a) ungesättigten Kohlenwasserstoffen, ausgewählt aus linearen, verzweigten und cyclischen aliphatischen Kohlenwasserstoffen mit 4 bis 8 Kohlenstoffatomen und deren niederen Oligomeren mit einem Polymerisationsgrad von 2 bis 10, wobei auch gemischte Oligomere eingeschlossen sind,
b) natürlich vorkommenden mindestens einfach ungesättigten Säuren ausgewählt aus Fettsäuren und Naturharzsäuren, und
c) einkernigen oder mehrkernigen Phenolen, mit
d) anorganischen oder organischen Säuren als Katalysator, wobei optional zusätzlich Verbindungen aus den Gruppen der
e) ungesättigten Dicarbonsäuren und/oder deren Anhydriden, und
f) mono- und/oder polyfunktionellen Alkoholen als Edukte eingesetzt werden, ein Verfahren zu ihrer Herstellung und ihre Verwendung als Bindemittel vor allem für Druckfarbenharze.

## Beschreibung

Die Erfindung betrifft modifizierte Kohlenwasserstoffharze, die vorteilhaft als Bindemittel in Druckfarben eingesetzt werden können, sowie Verfahren zu ihrer Herstellung.

Die Verwendung von Cyclopentadien als Rohstoff zur Herstellung von Bindemitteln für Druckfarben ist bekannt. Die Druckschrift DE-A 22 46 283 beschreibt die Umsetzung eines durch Polymerisation hergestellten Kohlenwasserstoffharzes aus Cyclopentadien, Methylcyclopentadien oder deren Polymeren und gegebenenfalls anderen ungesättigten Kohlenwasserstoffen mit ungesättigten Fettsäuren, z.B. Tallölfettsäure, in Gegenwart von Metallsalzen und gegebenenfalls Phenolen. Bei dieser Umsetzung werden die Phenolkomponenten jedoch nicht gleichmäßig eingebaut, so daß ein inhomogenes Produkt entsteht. Aus dem Patent US-A 4,433,100 ist ferner bekannt, synthetische Harze für Druckfarbenmischungen herzustellen, bei dem ein überwiegender Anteil von Dicyclopentadien mit geringen Anteilen mindestens eines ungesättigten Kohlenwasserstoffes, mindestens einer Komponente, die Fettsäuren oder Naturharzsäuren enthält und gegebenenfalls mindestens einer äthylenisch ungesättigten niederen aliphatischen Dicarbonsäure umgesetzt wird. Die erhaltenen Produkte entsprechen jedoch nicht allen Anforderungen, die an sie gestellt werden. Besonders die Leinölverträglichkeit ist ungenügend. Durch Einsatz von erhöhten Mengen von Maleinsäureanhydrid kann diese zwar verbessert werden, jedoch verschlechtert sich in diesem Fall dann die Mineralölverträglichkeit.

Der vorliegenden Erfindung lag somit die Aufgabe zugrunde, modifizierte Kohlenwasserstoffharze zur Verfügung zu stellen, die diese Nachteile nicht aufweisen.

Gegenstand der Erfindung sind modifizierte Kohlenwasserstoffharze, erhältlich durch Umsetzung von
a) ungesättigten Kohlenwasserstoffen, ausgewählt aus linearen, verzweigten und cyclischen aliphatischen Kohlenwasserstoffen mit 4 bis 8 Kohlenstoffatomen und deren niederen Oligomeren mit einem Polymerisationsgrad von 2 bis 10, wobei auch gemischte Oligomere eingeschlossen sind,
b) natürlich vorkommenden mindestens einfach ungesättigten Säuren ausgewählt aus Fettsäuren und Naturharzsäuren, und
c) einkernigen oder mehrkernigen Phenolen-, mit
d) anorganischen oder organischen Säuren als Katalysator, sowie gegebenenfalls
e) ungesättigten Dicarbonsäuren und/oder deren Anhydriden, und
f) mono- und/oder polyfunktionellen Alkoholen mit 2 bis 10 Kohlenstoffatomen.

Als Verbindungen der Substanzgruppe a) bis f) finden vorzugsweise Verwendung:
a) mindestens zweifach ungesättigte lineare, cyclische, polycyclische oder verzweigte aliphatische Kohlenwasserstoffe wie Cyclopentadien, Methylcyclopentadien und Dimethylcyclopentadien sowie deren Oligomere wie Di- und Tricyclopentadien, jeweils einzeln oder im Gemisch, ferner technisches Dicyclopentadien mit einem Massenanteil von mindestens 60, vorzugsweise 80 % Dicyclopentadien und andere ungesättigte Kohlenwasserstoffe des bei der Raffination anfallenden C₄- und C₅-Schnittes, die im allgemeinen als Dimere vorliegen, beispielsweise gemischte Dimere des Cyclopentadiens oder Methylcyclopentadiens mit Isopren, Piperylen und/oder Butadien, sowie anderen Verbindungen, die beim Cracken von Erdölfraktionen entstehen,
b) einfach oder mehrfach ungesättigte Fettsäuren mit 8 bis 40 C-Atomen oder deren Dimere, z.B. Soja- und Leinölfettsäure, vorzugsweise jedoch Tallölfettsäure, und Naturharzsäuren, z.B. Kolophonium, Abietinsäure, Lävopimarsäure oder Tallharze, jeweils einzeln oder im Gemisch,
c) Phenol selbst, (C₁-C₂₀)-Alkylphenole mit einem oder mehreren Alkylsubstituenten am aromatischen Kern, Arylphenole und Aralkylphenole mit jeweils mindestens einem Aryl- oder Aralkylsubstituenten, wie Kresole, Xylenole, Butylphenol, Amylphenol, Nonylphenol, Octylphenol, p-tert.-Butylphenol, Phenylphenol, Bisphenole, d.h. 2 über eine direkte Bindung, eine Alkylidengruppe mit 1 bis 3 Kohlenstoffatomen, eine Äther-, Sulfon-, Thioäther- oder Carbonyl-Brücke verknüpfte Hydroxyaromaten wie Bisphenol A, Bisphenol F, Dihydroxybenzophenon, Dihydroxydiphenyl, Dihydroxydiphenyläther, Friedel-Crafts-Additionsprodukte aus Phenolen und äthylenisch ungesättigten Monomeren, vorzugsweise Styrol, α-Methylstyrol, Vinyltoluol, Cyclopentadien und Dicyclopentadien sowie Gemische aus diesen,
d) Phosphorsäure, Alkyl- und Aryl-Phosphonsäuren, Schwefelsäure, Alkyl- und Arylsulfonsäuren, wobei die Alkylreste lineare oder verzweigte aliphatische Reste mit 1 bis 20 Kohlenstoffatomen sind, Fluoroschwefelsäure, Perchlorsäure, Fluoroborsäure, Trifluoressigsäure, Toluolsulfonsäure, Benzolsulfonsäure. Bevorzugt verwendet wird Phenolsulfonsäure.
e) Maleinsäure, Fumarsäure, Itaconsäure, Mesaconsäure, Citraconsäure, Tetrahydrophthalsäure, Methyltetrahydrophthalsäure und deren Anhydride, sowie die Gemische dieser äthylenisch ungesättigten Dicarbonsäuren und/oder deren Anhydride. Bevorzugt wird Maleinsäureanhydrid.
f) Propanol, Isopropanol, Butanol, Nonanol, Cyclohexanol, Benzylalkohol sowie polyfunktionelle aliphatische Alkohole, die zwei oder mehr Hydroxylgruppen pro Molekül enthalten, wie Glykol, Propandiol-1,2 und -1,3, Butandiol-1,4, Neopentylglykol, Glycerin, Trimethylolpropan, Trimethyloläthan, 1,2,6-Hexantriol, Pentaerythrit, Di- und Polypentaerythrit, Sorbit und Mannit. Vorzugsweise werden tri- und tetrafunktionelle Alkohole verwendet, besonders bevorzugt werden Glycerin und Pentaerythrit.

Gegenstand der Erfindung ist auch die Herstellung von modifizierten Kohlenwasserstoffharzen durch Umsetzung der Komponenten a) bis d) sowie gegebenenfalls e) und/oder f). Die Massenanteile der einzelnen Komponenten in der Reaktionsmischung betragen dabei für die oben definierten Edukte
a) 10 bis 95 %, vorzugsweise 15 bis 90 %, insbesondere 20 bis 85 %,
b) 0 bis 60 %, vorzugsweise 1 bis 50 %, insbesondere 5 bis 40 %,
c) 1 bis 40 %, vorzugsweise 2 bis 35 %, insbesondere 10 bis 30 %,
d) 0,001 bis 5 %, vorzugsweise 0,01 bis 4 %, insbesondere 0,1 bis 3 %,
e) 0 bis 25 %, vorzugsweise 0,5 bis 20 %, insbesondere 2 bis 15 %,
f) 0 bis 25 %, vorzugsweise 0,5 bis 20 %,
wobei die Summe der genannten Massenanteile der Komponenten a) bis f) stets 100 % ergibt. Durch Variation der Komponentenanteile lassen sich der Schmelzpunkt, die Verträglichkeit und die Viskosität des Endproduktes auf die gewünschten Werte einstellen.

Die Herstellung der modifizierten Kohlenwasserstoffharze erfolgt kontinuierlich oder diskontinuierlich durch Umsetzung eines Gemisches der Edukte in Lösung oder vorzugsweise in Substanz bei einer Temperatur von 80 bis 300 °C, vorzugsweise 90 bis 280 °C, wobei entweder zweckmäßigerweise die gesamte Mischung aus allen eingesetzten Edukten zur Reaktion gebracht wird oder aber bevorzugt einzelne Edukte vorgelegt und die übrigen während der Reaktion zudosiert werden. Insbesondere kann vorteilhaft durch die kontinuierliche Zugabe der Komponenten a) zu der vorgelegten Komponente b) und gegebenenfalls weiterer Komponenten der Reaktionsdruck während der Reaktionsführung auf unter 2 MPa (20 bar), vorzugsweise 0,1 bis 1,5 MPa (1 bis 15 bar), insbesondere 0,15 bis 0,6 MPa (1,5 bis 6 bar), begrenzt werden. Die als Katalysator wirkende Komponente d) kann zu jedem Zeitpunkt in die Reaktionsmischung eingetragen werden. Bevorzugt wird jedoch das Einbringen des Katalysators d) in die Reaktionsmischung bei gleichzeitiger Anwesenheit der Komponente c), wobei diese entweder bereits in der Reaktionsmischung vorhanden ist oder mit dem Katalysator d) zusammen in die Reaktionsmischung eingetragen wird. Die Zugabe des Katalysators kann dabei in einem Zuge erfolgen oder aber vorteilhaft kontinuierlich über einen Zeitraum von 0,1 bis 10 Stunden. Nach der Reaktion werden nicht umgesetzte Komponenten und flüchtige Umsetzungsprodukte durch Anlegen eines Vakuums und/oder durch Strippen der Reaktionsmischung mit inerten Lösungsmitteln, insbesondere Xylol, entfernt.

Die molare Masse der erfindungsgemäßen Harze kann durch Ausschlußchromatographie der Harzlösungen in Tetrahydrofuran an Polystyrolgel nach bekannten Methoden ermittelt werden. Die gewichtsmittlere molare Masse M_{w} der erfindungsgemäßen modifizierten Kohlenwasserstoffharze liegt über 400 g/mol, vorzugsweise jedoch in einem Bereich von 450 bis 250 000 g/mol, insbesondere 500 bis 200 000 g/mol.

Zur Charakterisierung der Lösungsviskosität der erfindungsgemäßen Harze werden toluolische Lösungen der Harze mit einem Massenanteil an Harz von 50 % hergestellt. Die Viskosität kann dabei in weiten Grenzen variiert werden und liegt bei 23 °C und 50 s⁻¹ im Bereich von 10 bis 1000 mPas, insbesondere im Bereich von 20 bis 500 mPas.

Die Erweichungstemperaturen der erfindungsgemäßen Harze werden gemäß DIN 53736 ermittelt. Sie liegen zwischen 50 °C und 250 °C, vorzugsweise 60 °C und 200 °C, insbesondere 90 °C und 190 °C.

Die erfindungsgemäßen Produkte weisen gute Verträglichkeiten mit Alkydharzen und mit Lösungsmitteln wie Mineralöl und trocknenden Ölen auf. Überraschend ist ihre lange Lagerstabilität, die mehr als 8 Monate betragen kann und ihr geringer Eigengeruch. Die erfindungsgemäßen Harze besitzen auch Vorteile in ihren drucktechnischen Eigenschaften.

Aufgrund seiner guten drucktechnischen Eigenschaften kann das erfindungsgemäße modifizierte Kohlenwasserstoffharz als Bindemittel für Druckfarben, insbesondere für Offsetdruck, vor allem für Rollen-Offsetdruck und Tiefdruck verwendet werden. Hier treten der hohe Glanz, die rasche Trocknung und die rasche Lösungsmittelabgabe als besonders günstige Eigenschaften hervor.

Die Erfindung wird in den folgenden Beispielen näher beschrieben.

### Beispiel 1

In einem 6 l-Rührautoklaven werden unter Inertgas 819 g Kolophonium, 1911 g 80 %iges Dicyclopentadien und 840 g Phenol bei 100 °C aufgeschmolzen und anschließend über einen Zeitraum von 1 Stunde auf 280 °C erhitzt. Nach 5 Stunden wird die Reaktionsmischung auf 240 °C abgekühlt, unter Druck über eine Pumpe wird 21 g Phenolsulfonsäure (65 %ig in Wasser) hinzudosiert. Die Reaktionsmischung wird über weitere 3 Stunden gerührt, anschließend werden die leichtflüchtigen Substanzen unter Vakuum bei 70 kPa (700 mbar) entfernt und das Reaktionsgemisch auf Raumtemperatur abgekühlt. Es wird ein klares Harz erhalten, welches einen Erweichungspunkt von 120 °C und in einer 50 %igen toluolischen Lösung bei 23 °C eine Viskosität von 50 mPas aufweist.

### Beispiel 2

In einem 6 l-Rührautoklaven werden unter Inertgas 1000 g Kolophonium bei 110 °C aufgeschmolzen und anschließend unter Rühren auf 265 °C erhitzt. Bei dieser Temperatur werden 2000 g 80%iges Dicyclopentadien unter Druck über einen Zeitraum von 6 Stunden hinzudosiert, wobei der Gesamtdruck im Kessel nicht über 0,3 MPa (3 bar) steigt. Nach Beendigung der Zugabe wird die Reaktionsmischung auf 180 °C abgekühlt, auf Atmosphärendruck entspannt und die Reaktionsmischung mit 400 g Kresol versetzt. Anschließend wird über einen Zeitraum von 2 Stunden 10 g Phenolsulfonsäure (65 %ig in Wasser) zudosiert, die Reaktionsmischung wird über weitere 2 Stunden bei 180 °C gerührt. Schließlich wird das Gemisch auf 220 °C erhitzt und die leichtflüchtige Verbindung zuerst unter Normaldruck und dann unter Vakuum bei 10 kPa (100 mbar) abdestilliert. Um weitere flüchtige Substanzen zu entfernen, wird unter Beibehaltung der Reaktionstemperatur 100 ml Xylol über eine Stunde submers eingeleitet und abdestilliert. Nach dem Strippen wird das sich noch in der Schmelze befindliche Xylol unter Vakuum entfernt, das Reaktionsgemisch wird auf Raumtemperatur abgekühlt. Es wird ein klares, geruchsneutrales Harz erhalten, welches einen Erweichungspunkt von 135 °C aufweist und in einer 50 %igen toluolischen Lösung bei 23 °C eine Viskosität von 100 mPas besitzt.

### Beispiel 3

Es wird gearbeitet wie in Beispiel 2 mit der Änderung, daß 500 g des Kolophoniums durch Tallölfettsäure ersetzt werden. Das klare, bernsteinfarbene Harz hat einen Erweichungspunkt von 105 °C und weist eine Viskosität von 70 mPas auf (50 %ige Lösung in Toluol bei 23 °C).

### Beispiel 4

Es wird gearbeitet wie in Beispiel 2 mit der Änderung, daß das Kolophonium vollständig durch 500 g Tallölfettsäure und 500 g Leinölfettsäure ersetzt wird. Das resultierende Produkt hat einen Erweichungspunkt von 60 °C und eine Viskosität von 10 mPas (50 %ige Lösung in Toluol bei 23 °C).

### Beispiel 5

Es wird gearbeitet wie in Beispiel 2 mit der Änderung, daß nach der Zugabe der Phenolsulfonsäure dem Reaktionsgemisch noch zusätzlich 30 g Maleinsäureanhydrid zugesetzt werden. Das klare Harz hat einen Erweichungspunkt von 185 °C und eine Viskosität von 200 mPas (50 %ige Lösung in Toluol bei 23 °C).

## Patentansprüche

1. Modifizierte Kohlenwasserstoffharze, erhältlich durch Umsetzung von
a) ungesättigten Kohlenwasserstoffen, ausgewählt aus linearen, verzweigten und cyclischen aliphatischen Kohlenwasserstoffen mit 4 bis 8 Kohlenstoffatomen und deren niederen Oligomeren mit einem Polymerisationsgrad von 2 bis 10, wobei auch gemischte Oligomere eingeschlossen sind,
b) natürlich vorkommenden mindestens einfach ungesättigten Säuren ausgewählt aus Fettsäuren und Naturharzsäuren, und
c) einkernigen oder mehrkernigen Phenolen, mit
d) anorganischen oder organischen Säuren als Katalysator

2. Modifizierte Kohlenwasserstoffharze nach Anspruch 1, dadurch gekennzeichnet, daß die Massenanteile in der Reaktionsmischung für die Edukte
a) 10 bis 95 %,
b) 0 bis 60 %,
c) 1 bis 40 % betragen.

3. Modifizierte Kohlenwasserstoffharze nach Anspruch 1, dadurch gekennzeichnet, daß zusätzlich Verbindungen aus den Gruppen der
e) ungesättigten Dicarbonsäuren und/oder deren Anhydriden, und
f) mono- und/oder polyfunktionellen Alkohole mit 2 bis 10 Kohlenwasserstoffatomen als Edukte eingesetzt werden.

4. Modifizierte Kohlenwasserstoffharze nach Anspruch 3, dadurch gekennzeichnet, daß die Massenanteile der Edukte in der Reaktionsmischung
e) 0,5 bis 25 %,
f) 0,5 bis 25 % betragen.

5. Modifizierte Kohlenwasserstoffharze nach Anspruch 1 bis 4, dadurch gekennzeichnet, daß die Katalysatoren d) in einem Massenanteil, bezogen auf die Masse der Reaktionsmischung, von 0,001 bis 5 % eingesetzt werden.

6. Verfahren zur Herstellung eines modifizierten Kohlenwasserstoffharzes nach Anspruch 1, dadurch gekennzeichnet, daß bei einer Temperatur von 80 bis 300 °C polymerisiert wird.

7. Verfahren zur Herstellung eines modifizierten Kohlenwasserstoffharzes nach einem oder mehreren der Ansprüche 1 bis 5, dadurch gekennzeichnet, daß die Komponente a) zu der vorgelegten Komponente b) und gegebenenfalls weiteren vorgelegten Komponenten zudosiert wird.

8. Verfahren zur Herstellung eines modifizierten Kohlenwasserstoffharzes nach einem oder mehreren der Ansprüche 1 bis 5, dadurch gekennzeichnet, daß der Reaktionsdruck während der Reaktionsführung unter 2 MPa (20 bar) beträgt.

9. Verfahren zur Herstellung eines modifizierten Kohlenwasserstoffharzes nach einem oder mehreren der Ansprüche 1 bis 5, dadurch gekennzeichnet, daß der Katalysator d) bei Anwesenheit der Komponente c) in die Reaktionsmischung eingetragen wird.

10. Verfahren zur Herstellung eines modifizierten Kohlenwasserstoffharzes nach einem oder mehreren der Ansprüche 1 bis 5, dadurch gekennzeichnet, daß der Katalysator d) zusammen mit der Komponente c) als Mischung in die Reaktionsmischung eingetragen wird.

11. Verfahren zur Herstellung eines modifizierten Kohlenwasserstoffharzes nach Anspruch 9, dadurch gekennzeichnet, daß die Zugabe des Katalysators d) über einen Zeitraum von 0,1 bis 10 Stunden erfolgt.

12. Verfahren zur Herstellung eines modifizierten Kohlenwasserstoffharzes nach einem oder mehreren der Ansprüche 1 bis 5, dadurch gekennzeichnet, daß die flüchtigen Umsetzungsprodukte durch Strippen der Reaktionsmischung mit inerten Lösungsmitteln, insbesondere Xylol, entfernt werden.

13. Modifizierte Kohlenwasserstoffharze nach einem oder mehreren der Ansprüche 1 bis 5, dadurch gekennzeichnet, daß die Erweichungstemperaturen dieser Harze zwischen 50 und 250 °C liegen.

14. Modifizierte Kohlenwasserstoffharze nach einem oder mehreren der Ansprüche 1 bis 5, dadurch gekennzeichnet, daß die Lösungsviskosität der Harze (50 %ige toluolische Lösungen bei 23 °C und 50 s⁻¹) im Bereich von 10 bis 1000 mPas liegen.

15. Verwendung der modifizierten Kohlenwasserstoffharze nach einem oder mehreren der Ansprüche 1 bis 11 als Bindemittel für Druckfarben, insbesondere für den Offsetdruck, Buchdruck und Toluoldruck.
